(19) Europäisches Patentamt
European Patent Office
Office européen des brevets

(11) **EP 1 477 793 B1**

(12) **EUROPÄISCHE PATENTSCHRIFT**

(45) Veröffentlichungstag und Bekanntmachung des Hinweises auf die Patenterteilung:
**18.01.2012 Patentblatt 2012/03**

(51) Int Cl.:
***G01N 21/89*** *(2006.01)* ***G01B 11/30*** *(2006.01)*

(21) Anmeldenummer: **04003014.0**

(22) Anmeldetag: **11.02.2004**

(54) **Verfahren zur Erkennung von Fehlern in transparentem Material**

Method for detecting defects in transparent materials

Procédé pour la detection de défauts dans les matériaux transparents

(84) Benannte Vertragsstaaten:
**AT BE BG CH CY CZ DE DK EE ES FI FR GB GR HU IE IT LI LU MC NL PT RO SE SI SK TR**

(30) Priorität: **04.04.2003 DE 10316707**

(43) Veröffentlichungstag der Anmeldung:
**17.11.2004 Patentblatt 2004/47**

(60) Teilanmeldung:
**10187717.3 / 2 278 304**

(73) Patentinhaber:
• **Schott AG**
**55122 Mainz (DE)**
• **ISRA VISION LASOR GmbH**
**33604 Bielefeld (DE)**

(72) Erfinder:
• **Gerstner, Klaus, Dr.**
**55129 Mainz (DE)**
• **Ottermann, Clemens, Dr.**
**65795 Hattersheim (DE)**
• **Zimmermann, Thomas**
**45721 Haltern am See (DE)**
• **Droste, Josef**
**49219 Glandorf (DE)**

(74) Vertreter: **Mehler Achler**
**Patentanwälte**
**Bahnhofstraße 67**
**65185 Wiesbaden (DE)**

(56) Entgegenhaltungen:
**WO-A-99/49304    US-B1- 6 437 357**

• **PATENT ABSTRACTS OF JAPAN Bd. 1997, Nr. 02, 28. Februar 1997 (1997-02-28) -& JP 08 261953 A (FUJI PHOTO FILM CO LTD), 11. Oktober 1996 (1996-10-11)**
• **PATENT ABSTRACTS OF JAPAN Bd. 1998, Nr. 12, 31. Oktober 1998 (1998-10-31) & JP 10 185829 A (MATSUSHITA ELECTRIC IND CO LTD), 14. Juli 1998 (1998-07-14)**

**Beschreibung**

Die Erfindung betrifft ein Verfahren zur Erkennung von Fehlern in transparentem Material nach dem Oberbegriff des unabhängigen Anspruchs 1. Die Erfindung dient der Bestimmung der optischen Qualität und der Detektion von Fehlern in transparentem Material, und zwar festem Material wie insbesondere Glas oder Kunststoffen, wie beispielsweise Polyvinylchlorid (PVC), Polypropylen (PP), Polyethylen (PE) oder andere transparente Duroplaste, Elastomere oder Thermoplaste. Besonders bevorzugt wird die Anwendung dieser Erfindung für die Qualitätsuntersuchung von Flachglas und Float-Glas.

Die WO 99/49303 beschreibt ein Verfahren und eine Vorrichtung zur Detektion von Fehlern in Flachglas. Hierbei betrachtet eine Kamera einen Fleck auf der Grenze einer zweigeteilten Beleuchtungsvorrichtung. Die Zweiteilung wird dadurch realisiert, dass in der einen Hälfte der Beleuchtungsvorrichtung rote LED's vorgesehen sind, und in der anderen Hälfte grüne LED's. Zwischen der Beleuchtungsvorrichtung und der Kamera befindet sich relativbewegtes Flachglas. Befindet sich im Flachglas ein strahlablenkender Fehler, wie beispielsweise eine hinreichend große Blase, so lenkt dieser Fehler die von der Beleuchtungseinrichtung zur Kamera führenden Strahlen ab. Hierdurch gelangt eine veränderte Menge an rotem bzw. grünen Licht in die wellenlängenempfindliche Kamera, so dass ein Ablenkungssignal erzeugt wird. Auf diese Weise kann die Vorrichtung strahlablenkende Fehler detektieren. Weiterhin wird auch das Hellfeldsignal benutzt, um die Größe des entsprechenden strahlablenkenden Fehlers zu vermessen.

Die japanische Patentveröffentlichung H 10-339795 lehrt die Detektion von Fehlern in Flachglas dadurch, dass parallele Lichtstrahlen schräg zur Seitenkante des Flachglases eingekoppelt werden. Durch diese Art der Einkopplung kommt es im Inneren des bandförmigen Glasmaterials zur einer Totalreflexion, so dass das Licht von der einen Seite des Flachglases zur anderen wandert. Befindet sich im Inneren des Flachglases ein Glasfehler, wie beispielsweise ein Einschluss, ein Knoten oder eine Blase, so wird das in das Volumen eingekoppelte Licht gestreut. Das Streulicht wird von einem Detektor erfasst.

Die DE 102 21 945.1 vom 15.05.2002 offenbart ein hierzu ähnliches Verfahren, bei dem ein Laserstrahl seitlich in ein Flachglas eingekoppelt wird, und wobei das Laserlicht im Inneren infolge Totalreflektion zur anderen Seite des Flachglasbandes wandert. Hierbei wird der Laserstrahl an der Seitenkante des Flachglases über Wasser in das Glas eingekoppelt. Hierdurch wird der Nachteil überwunden, dass bei Float-Glas keine definierte Kantengeometrie vorhanden ist, und es im Unterschied zur vorgenannten japanischen Patentanmeldung nur schwer fällt, auf definierte Art und Weise seitlich zur Seitenkante Strahlung einzukoppeln.

Der Erfindung liegt das technische Problem zugrunde ein Verfahren zur Erkennung von Fehlern in transparentem Material derart weiterzubilden, dass nur Signale aus dem Volumen für die Fehlererkennung und Größenbestimmung herangezogen werden.

Aus dem Patent Abstracts of Japan, Bd. 1997 Nr. 2 bzw. aus der JP 8-261 953 A ist ein Verfahren zum Erkennen von Fehlern in transparentem Material bekannt, bei dem mit einer ersten Strahlungsquelle ein definiertes Teilvolumen des Materials bestrahlt wird, und bei dem mit einer zweiten Strahlungsquelle derartig Licht in das Material eingekoppelt wird, dass das Licht durch besagtes Teilvolumen ausschließlich im Inneren des Materials verläuft und bei dem ein Fehler im Teilvolumen erkannt wird.

Ein weiteres Verfahren und eine Vorrichtung zur Detektion von Fehlern in Flachglas ist darüber hinaus bekannt aus der WO 99/49304 A.

Der Erfindung liegt das technische Problem zugrunde ein Verfahren zur Erkennung von Fehlern in transparentem Material derart weiterzubilden, dass nur Signale aus dem Volumen für die Fehlererkennung und Größenbestimmung herangezogen werden.

Die Lösung dieses technischen Problems erfolgt durch die Merkmale des unabhängigen Anspruchs 1. Vorteilhafte Weiterbildungen werden durch die abhängigen Ansprüche angegeben.

Der Lösung liegt die Erkenntnis zugrunde, dass die bisherigen Beschränkungen in der Brauchbarkeit des Hellfeldverfahrens zur Erkennung von Fehlern in transparenten Materialien ihre Ursache darin haben, dass mit dieser Messmethode keine räumliche Separation der Fehler vorgenommen werden kann. So konnte bislang nicht unterschieden werden, ob das jeweilige Hellfeldsignal, welches im Rahmen dieser Anmeldung definiert sein möge als das Signal, dessen Stärke proportional zur (lokalen) Abnahme der Intensität im Hellfeld infolge Absorption ist, seine Ursache in einem Fehler hat, welcher im Volumen oder aber auf der Oberfläche hat. Die Absorption im Hellfeld kann insofern durch Fehler innerhalb des Glases verursacht werden oder aber auch durch Fehler, wie insbesondere Schmutz, welcher auf der Oberfläche des Glases ist. Diese beiden Fälle konnten bislang nicht unterschieden werden.

Auf dieser Erkenntnis aufbauend, besteht die erfinderische Idee darin, das Hellfeldverfahren mit einem zweiten Verfahren zu kombinieren, welches prinzipbedingt nur auf Fehler im Volumen sensitiv sein kann. Hierbei wird Sorge getragen, dass von beiden Verfahren nur dasselbe Teilvolumen des transparenten Materials untersucht wird, so dass sichergestellt ist, dass beide Verfahren denselben Fehler detektieren können. Durch Kombination der beiden Verfahren ist es möglich, auf Koinzidenz von Hellfeldsignal und einem Signal des zweiten Verfahrens zu prüfen und im Koinzidenzfall aussagen zu können, dass die Ursache des Hellfeldsignales im Inneren des Materials befindlich ist. Ohne Koinzidenz befindet sich der Fehler nicht im Volumen, sondern auf der Oberfläche, und es handelt sich in den meisten Fällen um Schmutzeffekte.

Basierend auf obigen Überlegungen sieht das Verfahren zur Erkennung von Fehlern in transparentem Material vor, dass mit einer ersten Strahlungsquelle ein definiertes Teilvolumen des Materials einer Hellfeldbeleuchtung unterzogen wird und dass mit einer zweiten Strahlungsquelle derart Licht in das Material eingekoppelt wird, dass bei einem Übergang des Lichts der zweiten Strahlungsquelle (5) vom transparenten Material zur Luft der Einstrahlwinkel gegenüber der Oberflächennormale größer als der Grenzwinkel der Totalreflexion ist und der Lichtweg das Teilvolumen passiert, und bei dem ein Fehler im Teilvolumen dadurch erkannt wird, dass die vom Fehler hervorgerufene Absorption im Hellfeld der ersten Strahlungsquelle und vom Fehler gestreutes Licht der zweiten Strahlungsquelle detektiert wird. Das vom Streulicht verursachte Signal soll hierbei nachfolgend als Streulichtsignal bezeichnet werden.

Der Lösung liegt ferner die Erkenntnis zugrunde, dass strahlablenkende Verfahren zur Erfassung von Fehlern in transparentem Material, also Verfahren, bei denen das transparente Material von außen bestrahlt wird und die Fehler das beaufschlagende Licht ablenken, ebenfalls nicht differenzieren können ob die Strahlablenkung ihre Ursache auf der Materialoberfläche oder im Materialinneren haben.

Bezugnehmend auf die Ausführungen des vorvorletzten Absatzes besteht insofern die erfinderische Idee weiterhin darin, ein Strahlablenkungsverfahren mit einem zweiten Verfahren zu kombinieren, das ausschließlich auf Fehler im Materialinneren oder mit anderen Worten im Volumen anspricht.

Das Verfahren zur Erkennung von Fehlern in transparentem Material sieht deshalb weiterhin vor, dass mit einer ersten Strahlungsquelle ein definiertes Teilvolumen des Materials bestrahlt wird und dass mit einer zweiten Strahlungsquelle derart Licht in das Material eingekoppelt wird, dass bei einem Übergang des Lichts der zweiten Strahlungsquelle (5) vom transparenten Material zur Luft der Einstrahlwinkel gegenüber der Oberflächennormale größer als der Grenzwinkel der Totalreflexion ist und der Lichtweg das Teilvolumen passiert, und bei dem ein Fehler im Teilvolumen dadurch erkannt wird, dass sowohl vom Fehler gestreutes Licht als auch die vom Fehler hervorgerufene Ablenkung des Lichts der ersten Strahlungsquelle detektiert wird.

Das vom abgelenkten Licht verursachte Signal im Strahlungsdetektor werde nachfolgend als Ablenkungssignal bezeichnet.

Die beiden oben genannten Verfahren können alternativ oder kumulativ betrieben werden.

Zusammenfassend besteht damit die Lösung des o. g. technischen Problems in einem Verfahren zur Erkennung von Fehlern in transparentem Material, bei dem mit einer ersten Strahlungsquelle ein definiertes Teilvolumen des Materials bestrahlt wird, und bei dem mit einer zweiten Strahlungsquelle derart Licht in das Material eingekoppelt wird, dass bei einem Übergang des Lichts der zweiten Strahlungsquelle (5) vom transparenten Material zur Luft der Einstrahlwinkel gegenüber der Oberflächennormale größer als der Grenzwinkel der Totalreflexion ist und der Lichtweg das Teilvolumen passiert und bei dem ein Fehler im Teilvolumen dadurch erkannt wird, dass

a) sowohl vom Fehler gestreutes Licht der zweiten Strahlungsquelle, als auch
b) die vom Fehler hervorgerufene Absorption im Hellfeld der ersten Strahlungsquelle, und
c) die vom Fehler hervorgerufene Ablenkung des Lichts der ersten Strahlungsquelle

detektiert werden.

Eine zur Ausführung des Verfahrens geeignete Vorrichtung zur Erkennung von Fehlern in transparentem Materialweist eine erste Strahlungsquelle zur Beleuchtung eines definierten bzw. vorgegebenen Teilvolumens des transparenten Materials, einen Detektor zur Erfassung des vom besagten Teilvolumens herrührende Lichts, und eine zweiten Strahlungsquelle auf, die derart zum Material angeordnet ist, dass im besagten Teilvolumen der zugehörige Lichtweg ausschließlich im Inneren des Materials verläuft.

Dem an Fehlern im Material gestreuten Licht der zweiten Strahlungsquelle ist ein Detektor zugeordnet. Dieser kann identisch mit dem Detektor sein, der das Licht der ersten Strahlungsquelle erfasst, oder von ihm verschieden sein.

Es ist vorgesehen, dass das Hellfeld ortsaufgelöst vermessen wird. In diesem Fall lässt sich die Größe des im Volumen befindlichen Fehlers ermitteln. Dies ist in der Qualitätskontrolle in der Glasfertigung von großer Bedeutung, denn dabei geht es zunehmend darum, nur noch kleine Defekte für hochwertige Produkte zuzulassen. So ist es beispielsweise bei der Herstellung von TFT-Glas, welches für Flachbildschirme Verwendung findet, zunehmend erforderlich, Defekte mit einem Durchmesser von größer als 50 μm auszuschließen. In der Fertigung besteht insofern die Spezifikation, dass nur noch eine gewisse definierte Anzahl von Fehlern mit einem Fehlerdurchmesser größer 50 μm zugelassen werden können. Über die Zahl der Koinzidenzsignale kann insofern geschlossen werden, ob das hergestellte Produkt diesen Anforderungen genügt.

Zur Bestimmung des Fehlertyps ist es möglich, das Verhältnis von Hellfeldsignal zu Streulichtsignal heranzuziehen. Wird durch das erfindungsgemäße Verfahren beispielsweise eine Blase im Volumen beleuchtet, so kommt es zur Lichtstreuung im strahlaustrittsseitigen Teil der Blase. Bei einem Einschluss hingegen, kommt es nur zu einer Streuung auf einer Seite des Einschlusses, und es wird auch insgesamt bei gleicher Fehlergröße weniger Streulicht erzeugt. Insofern kann über das besagte Signalverhältnis differenziert werden, ob es sich um einen Einschluss oder eine Blase handelt. Auch das Verhältnis von Ablenksignal zu Streulichtsignal kann in diesem Sinne zur Bestimmung des Fehlertyps herangezogen werden. Unter Berücksichtigung weiterer im transparenten Material befindlicher Fehler lässt sich dieses verallgemeinern. Bei weiteren Untersuchungen der Erfinder zeigte es sich, dass jeder Fehlertyp über eine eigencharakteristische dreidimensionale Strahlungscharakteristik verfügt, so dass weiterführend über diese Strahlungscharakteristik eine Typisierung der erfassten Fehler vorgenommen werden kann.

Es ist günstig, wenn die zweite Strahlungsquelle monochromatisches Licht emittiert, also ein Laser ist. In diesem Fall kann besonders leicht Licht über die Seitenkante in ein bandförmiges Flachglas eingekoppelt werden. Weiterhin hat dies den Vorteil, dass eine hohe Lichtintensität zur Verfügung steht. Bei einem Flachglas, welches beispielsweise mit einer Halogenlampe beleuchtet würde, wäre damit zu rechnen, dass die Intensität des eingekoppelten Lichts infolge Absorption zur Mitte des Bandes hin stark abnimmt, bei einem 1,2 m Breitband, beispielsweise auf 5 % des im Rand eingekoppelten Wertes, so dass bei einer Auswertung eine aufwändige rechnerische Kompensation erforderlich ist, will man aus dem detektierten Streulicht die Größe der Fehlstellen über die gesamte Breite des Bandes richtig beurteilen. Ein Laser hat jedoch das Potential, dass beim erfindungsgemäßen Verfahren noch genügend Intensität nach einer entsprechend zurückgelegten Wegstrecke des Lichts vorliegt.

Eine vorteilhafte Verwendung des Verfahrens stellt sich ein, wenn die jeweilige Strahlung in bandförmiges Flachglas eingekoppelt wird, und dieses entsprechend auf Fehler untersucht wird. Dieses Flachglas ist produktionsbedingt relativ zu den Strahlungsquellen bewegt, und zwar mit Vorschubgeschwindigkeiten von 10 m/Min., so dass pro Minute aufgrund der Plattenbreite etwa 26 m$^2$ untersucht werden können. Die Dicke derartiger Gläser liegt typischerweise zwischen 0,4 -1,1 mm.

Wenn die zweite Strahlungsquelle im grünen Wellenlängenbereich bzw. grünes Licht emittiert, fällt die Absorption bei technischen Gläsern besonders gering aus, denn diese haben eisenhaltige Verunreinigungen mit einem Absorptionsminimum in besagtem grünen Wellenlängenbereich. Demgemäß ist es vorteilhaft, wenn die Emissionsfrequenz eines eventuell gewählten Lasers 532 nm ist.

Wenn die zweite Strahlungsquelle rotes Licht emittiert, stellt sich eine besonders geringe Absorption bei optischen Gläsern ein. Für diese Fälle bietet sich ein Helium-Neon-Laser oder im roten Wellenlängenbereich emittierende LED's oder Diodenlaser als Strahlungsquellen an. Verallgemeinernd ist es günstig, die Wellenlänge so zu wählen, dass sie vom Material möglichst wenig absorbiert wird.

In Experimenten hat es sich als vorteilhaft erwiesen, wenn die Intensität des von der zweiten Strahlungsquelle eingekoppelten Lichts am Materialrand etwa 10-mal so hoch ist, wie in der Mitte. So wurde bei Experimenten mit in Flachglas eingekoppelten Licht festgestellt, dass es bei der unweigerlich stattfindenden Absorption im Glas keine Lösung ist, die Schwächung des Lichtes auf einfache Weise durch Steigerung der eingekoppelten Intensität zu kompensieren. Vielmehr kam es vermehrt zu Störsignalen, welche vermutlicherweise ihre Ursache in Schmutz auf der Glasoberfläche hatten. Insofern "leuchtete" der Schmutz auf der Oberfläche und führte zu Schwierigkeiten bei der Signalverarbeitung. Insofern stellt das genannte Intensitätsverhältnis eine gute Balance dar zwischen einer hinreichend hohen Intensität einerseits und hinreichend geringen Störsignalen andererseits. Um dieses Intensitätsverhältnis einzustellen, kann die Wellenlänge auf das jeweilige Material abgestimmt werden, da die Absorption mit unterschiedlichen Wellenlängen materialabhängig Änderungen erfährt. Alternativ oder kumulativ kann das Intensitätsverhältnis auch durch eine geänderte Fokussierung des eingekoppelten Laserlichtes vorgenommen werden.

Um zu gewährleisten, dass das Licht der zweiten Strahlungsquelle im zu untersuchenden Teilvolumen ausschließlich im Inneren des Materials verläuft, wird das Licht der zweiten Strahlungsquelle derart eingekoppelt, dass es im Inneren totalreflektiert wird. Dies kann dadurch erfolgen, dass das Licht schräg zur Ober- oder Unterseite des Materials eingekoppelt wird, und zwar so, dass beim anschließenden Übergang des Lichts vom transparenten Material zur Luft der Einstrahlwinkel gegenüber der Oberflächennormale größer als der Grenzwinkel der Totalreflexion ist. Alternativ kann das Licht der zweiten Strahlungsquelle auch schräg zur Seitenkante des Materials eingekoppelt werden. Diese Vorgehensweise eignet sich insbesondere bei der Untersuchung von Flachglas oder Float-Glas, wobei das Licht sozusagen im Inneren gefangen wird, wie in einer Lichtleitfaser. Gleichzeitig kann damit nicht nur ein kleines Teilvolumen untersucht werden, sondern es kann über die gesamte Breite des Flachglases auf Fehler hin untersucht werden. Entsprechend muss die zugehörige Vorrichtung so geartet sein, dass sie nicht nur ein kleines Teilvolumen abtastet, sondern eine Vielzahl von Teilvolumina schräg zur Vorschubrichtung des Flachglases.

Wenn Float-Glas mit dem erfindungsgemäßen Verfahren auf Fehler hin untersucht werden soll, stellt dieses Float-Glas an seiner Berandung keine definierte Kantengeometrie bereit, die man nutzen kann, um schräg zur Seitenkante Licht der zweiten Strahlungsquelle einzukoppeln. Insofern ist es günstig, wenn zwischen der zweiten Strahlungsquelle und dem Float-Glas eine transparente Flüssigkeit angeordnet ist, so dass das Licht der zweiten Strahlungsquelle über eine transparente Flüssigkeit, wie beispielsweise Wasser, in das Band eingekoppelt wird. Durch die transparente Flüssigkeit, welche im Kontakt mit der unregelmäßigen Berandung steht, werden Geometrieunterschiede kompensiert und gelingt die Einkopplung des Laserlichts zuverlässig.

Wenn beide Strahlungsquellen gepulstes Licht emittieren, wobei die eine Strahlungsquelle ausschließlich in den Pulspausen der anderen Strahlungsquellen emittiert, kann ein einziger Detektor für die Detektion der Fehler im transparenten Material eingesetzt werden. So wird über die Strahlung der ersten Strahlungsquelle das Hellfeld erfasst, zeitlich versetzt auf entsprechende Streulichtsignale detektiert, und dies alternierend. Da andererseits auf Koinzidenz der beiden Signale getestet wird, versteht es sich von selbst, dass die Vorschubgeschwindigkeit des Materials an die entsprechende Pulsdauer der Strahlungsquellen angepasst werden muss, um zu gewährleisten, dass beide Strahlungsquellen das gleiche Teilvolumen durchleuchten. Entsprechend ist eine die beiden Strahlungsquellen steuernde Elektronik vorgesehen, in der Regel eine Multiplexing-Einheit, die derart ausgebildet ist, dass die Strahlungsquellen ausschließlich zeitversetzt emittieren.

Prinzipbedingt vermag das vorgeschlagene Verfahren nur dann eine Koinzidenz anzuzeigen, wenn im Hellfeld eine Strahlungsabsorption festgestellt wird. Fällt diese Absorption zu gering aus oder ist sie gar nicht vorhanden, so kann dieser entsprechende Fehler nicht gefunden werden. In solchen Fällen ist es jedoch gegebenenfalls möglich, diesen Fehler dadurch zu detektieren, dass man auf die vom ihm hervorgerufene strahlablenkende Wirkung bei Beleuchtung testet. Wird eine Hellfeldbeleuchtung in Transmission vorgenommen, d. h. befindet sich das transparente Medium zwischen Kamera und Beleuchtungsvorrichtung, so wird bei einem strahlablenkenden Fehler das ihn beaufschlagende Licht abgelenkt und gelangt an einer anderen Stelle auf einen Detektor als ohne diesen strahlablenkenden Effekt.

Um eine derartige Strahlablenkung zu erfassen kann die erste Strahlungsquelle zweigeteilt ausgebildet sein und Licht mit zwei unterschiedlichen Intensitäten oder Farben emittieren. Werden beispielsweise zwei Farben emittiert, z. B. rot und grün, so führt die strahlablenkende Wirkung des Fehlers dazu, dass nun eine geänderte Menge an rotem bzw. grünem Licht in den Detektor fällt. Wird nun jeder Lichtfarbe ein Spannungssignal $U_1$ bzw. $U_2$ am Detektor zugeordnet, so kommt es entsprechend bei einer Strahlablenkung zu einer Veränderung dieser Spannungen $U_1$ bzw. $U_2$. Als Maß für die Ablenkung kann die Differenz der beiden Spannungen herangezogen werden.

Alternativ hierzu kann man das Verhältnis

$$U_{pos} = \frac{U_1 - U_2}{U_1 + U_2}$$

heranziehen. Die Amplitude von $U_{pos}$ ist dann ein Maß für die Stärke der Ablenkung eines Fehlers.

Durch die zusätzliche Erfassung strahlablenkender Fehler, werden somit insgesamt mehr Typen von Fehlern messtechnisch erfasst und steigert sich die Sicherheit bei der Erfassung von Fehlern mit einer Maximalgröße, die im Fertigungsprozess noch akzeptabel ist.

Es ist auch möglich, Streulichtsignal, Strahlablenkungssignal und Hellfeldsignal simultan zu verarbeiten. Hierdurch können strahlablenkende Fehler auf der Oberfläche erkannt und für die Qualitätsuntersuchung des Materials verworfen werden. Treten diese drei Signale in Koinzidenz auf, so bedeutet dies, dass ein aus dem Volumen stammender, strahlablenkender und strahlabsorbierender Fehler erfasst und größenmäßig erfasst werden kann. Der Umstand, dass dieser Fehler auch strahlablenkend ist, erlaubt eine weitergehende und verfeinerte Typisierung der Fehler wie oben angesprochen.

Die Bereitstellung der unterschiedlichen Farben für die beiden Teile der ersten Strahlungsquellen kann dadurch erfolgen, dass in beiden Teilen verschiedenfarbige LED's zugeordnet sind. Dieses Licht kann dann von einer CCD-Kamera detektiert werden.

Es ist möglich, das Streulicht einerseits und die abgelenkte Strahlung und/oder das Hellfeldsignal andererseits mit unterschiedlichen Detektoren zu erfassen.

Um den apparativen Aufwand gering zu halten ist es vorteilhaft, wenn beide Strahlungsquellen gepulst emittieren, so dass die erste Strahlungsquelle bevorzugt eine gepulste Strahlungsquelle ist. In Kombination mit einer gepulsten zweiten Strahlungsquelle, beispielsweise ein gepulst arbeitender Laser, kann dann sichergestellt werden, dass eine Strahlungsquelle ausschließlich in den Pulspausen der anderen Strahlungsquelle emittiert. Hierzu besitzt die Vorrichtung eine die beiden Strahlungsquellen steuernde Elektronik, die derart ausgebildet ist, dass die beiden Strahlungsquellen ausschließlich zeitversetzt Licht emittieren.

Wird, wie oben ausgeführt, eine zweigeteilte erste Strahlungsquelle gewählt, so entspricht dies dem Fall dreier Lichtquellen. Die eine Lichtquelle emittiert insofern in der gemeinsamen Pulspause der beiden anderen Lichtquellen.

Zur Verarbeitung der detektierten Signale ist ferner eine Auswerteeinheit zur Feststellung von Hellfeldsignal. Streulichtsignal und Ablenkungssignal vorgesehen.

Nachfolgend soll die Erfindung anhand von eines Ausführungsbeispieles näher erläutert werden.

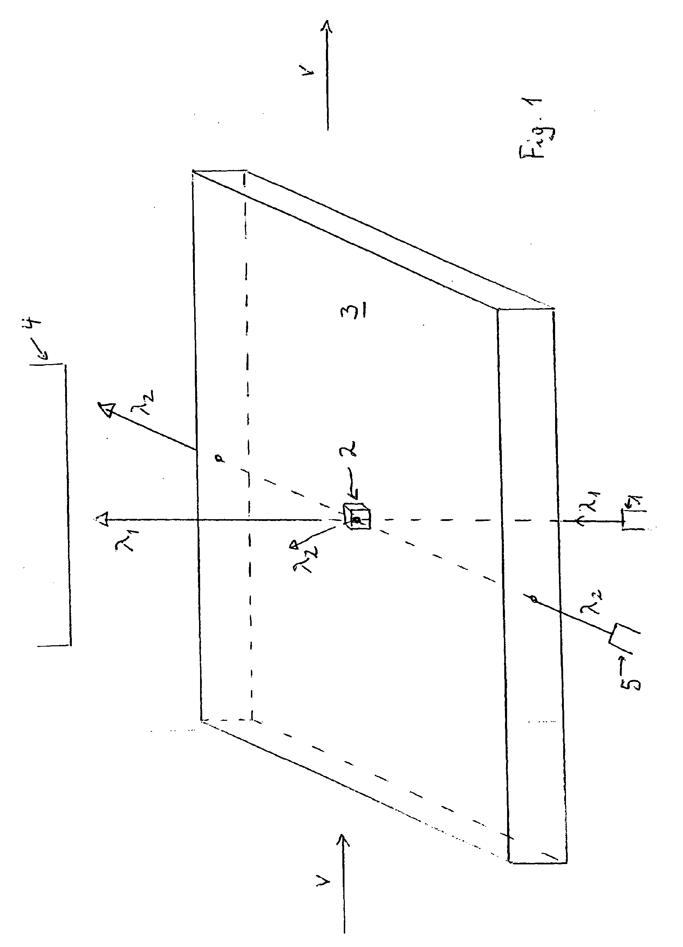

Fig. 1 zeigt in einer schematischen Darstellungsweise das erfindungsgemäße Verfahren, bei dem eine erste Strahlungsquelle 1 mit Wellenlänge $\lambda_1$ von unterhalb eines plattenförmigen Glaskörpers 3 einstrahlt. Nach dem zweimaligen Durchtritt des Lichts gelangt es in den Detektor 4. Die Strahlungsquelle erfasst hierbei im Inneren des Glasmaterials 3 ein Teilvolumen 2.

Zusätzlich wird das Glasteil 3 über die Seitenkante der Glasplatte 3 mittels der zweiten Strahlungsquelle 5 mit einem Licht der Wellenlänge $\lambda_2$ beaufschlagt. Das Licht der zweiten Strahlungsquelle wird hierbei am vorgegebenen Teilvolumen 2 teilweise gestreut, was durch den seitlich nach links gerichteten Pfeil angedeutet wird. Die Glasplatte 3 seitlich von links nach rechts mit der Geschwindigkeit v bewegt.

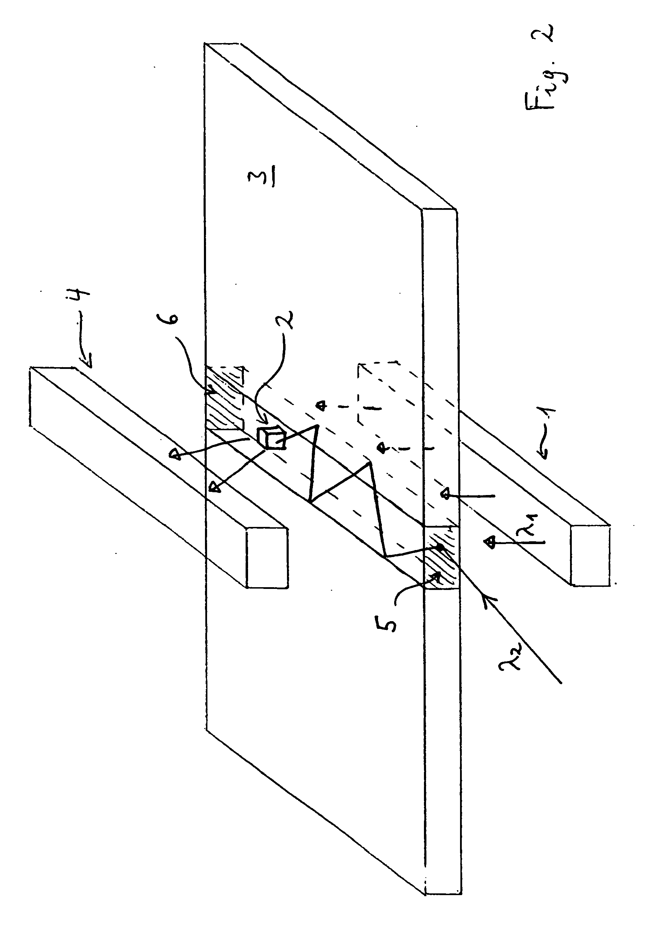

Fig. 2 zeigt erneut die Glasplatte 3, diesmal mit einer stabförmigen Lichtquelle 1, die senkrecht zur Unterseite der Platte Licht der Wellenlänge $\lambda_1$ emittiert. Zusätzlich gelangt Strahlung der Wellenlänge $\lambda_2$ in einen Bereich 5 der Seitenkante. Die Einkopplung erfolgt derart, dass Licht der Wellenlänge $\lambda_2$ im Inneren total reflektiert wird, was durch die Zickzack-Linie angedeutet wird. Das total reflektierte Licht wird hierbei am besagten Teilvolumen 2 partiell gestreut und gelangt in den Detektor 4. Der nicht gestreute Lichtanteil gelangt über die Fläche 6 am anderen Ende der Glasplatte 3 aus dem Glas heraus.

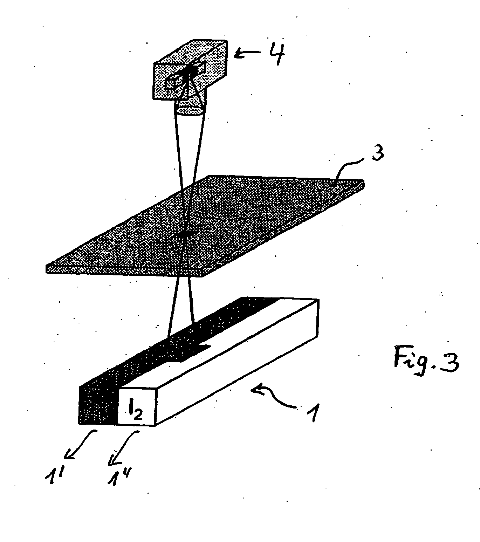

Fig. 3 zeigt eine zu Fig. 2 ähnliche Vorrichtung, bei der im Unterschied hierzu die Belichtungseinheit 1 zweigeteilt ist. Sie weist einen ersten Bereich 1' und einen zweiten Bereich 1" auf. Beide Bereiche haben rote LED's die abwechselnd Licht emittieren. Die CCD-Kamera 4 fokussiert auf das Teilvolumen im Glas 3. In Verlängerung dieser Richtung erfasst damit der Detektor 4 einen Teil der Oberfläche der taktweise Licht abstrahlenden Beleuchtungseinrichtung 1 an der Grenze zwischen den Bereichen 1' und 1".

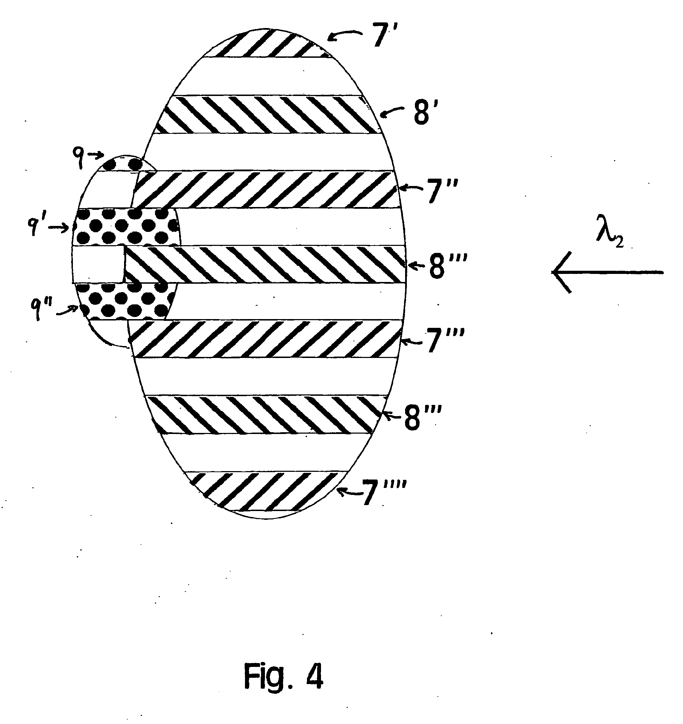

Fig. 4 zeigt in einer Prinzipdarstellung einen erkannten Fehler in Form einer Blase. Die große und in etwa eiförmige Struktur erhält man über Auswertungen der Absorption im Hellfeld. Der CCD-Chip detektiert alternierend hintereinander das Licht LED 1 und das Licht LED 2, nämlich 7', 8', 7", 8", 7''', 8''', 7'''', 8''''. LED 1 steht hierbei für das Licht des ersten Bereichs 1' der Belichtungseinrichtung 1, und LED 2 für das Licht des zweiten Bereichs 1 ".

Zusätzlich wurde seitlich von recht nach links Licht der Wellenlänge $\lambda_2$ über die Kante eingekoppelt. Dieses Kantenlicht durchdrang die Blase von rechts nach links und führte im strahlaustrittseitigen Bereich zur Streuung.

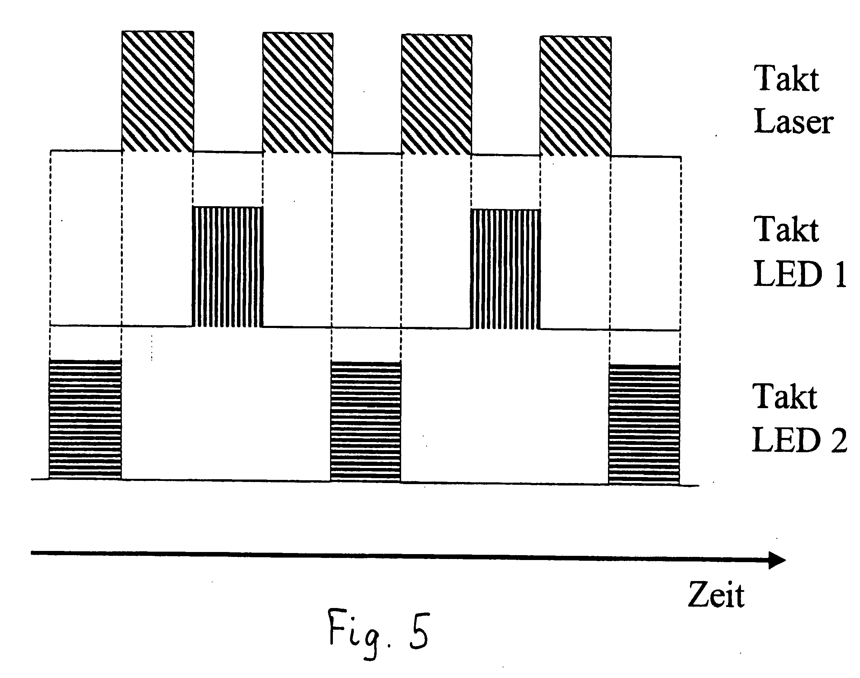

Der Lasertakt wurde hierbei an die Taktung der Bereiche 1' und 1" angepasst. Die vorgenommene Taktung ist durch Fig. 5 dargestellt. Abwechselnd hintereinander emittierte der erste Bereich 1', dann der zweite Bereich 1", und dann der Laser das jeweiliges Licht. Die eine Lichtquelle emittierte insofern jeweils in der gemeinsamen Pulspause der beiden anderen Lichtquellen. Der einzige Detektor erfasste im Streuungsbereich hintereinander Licht 9' des Lasers, Licht 7" von LED 1, Licht 9" des Lasers, Licht 8''' von LED 2, Licht 9" des Lasers und Licht 7''' von LED 1 usw.

**Patentansprüche**

1. Verfahren zur Erkennung von Fehlern in transparentem Material (3), bei dem mit einer ersten Strahlungsquelle (1) ein Teilvolumen (2) des Materials (3) bestrahlt wird, bei dem mit einer zweiten Strahlungsquelle (5) derart Licht in das Material (3) eingekoppelt wird, dass bei einem Übergang des Lichts der zweiten Strahlungsquelle (5) vom transparenten Material zur Luft der Einstrahlwinkel gegenüber der Oberflächennormale größer als der Grenzwinkel der Totalreflexion ist und der Lichtweg das Teilvolumen (2) passiert, und bei dem ein Fehler im Teilvolumen (2) erkannt wird **dadurch gekennzeichnet dass**

a) vom Fehler gestreutes Licht der zweiten Strahlungsquelle (5), und
b) eine vom Fehler hervorgerufene Absorption im Hellfeld der ersten Strahlungsquelle (1), und
c) eine vom Fehler hervorgerufene Ablenkung des Lichts der ersten Strahlungsquelle (1)

detektiert werden.

2. Verfahren nach Anspruch 1, **dadurch gekennzeichnet, dass** das Material (3) ortsaufgelöst vermessen wird.

3. Verfahren nach Anspruch 1 oder 2, **dadurch gekennzeichnet, dass** das Verhältnis von Hellfeldsignal oder Ablenksignal zu Streulichtsignal zur Bestimmung des Fehlertyps herangezogen wird.

4. Verfahren nach einem der Ansprüche 1 bis 3, **dadurch gekennzeichnet, dass** die zweite Strahlungsquelle (5) monochromatisches Licht emittiert.

5. Verfahren nach einem der Ansprüche 1 bis 4, **dadurch gekennzeichnet, dass** die jeweilige Strahlung in bandförmiges Flachglas (3) eingekoppelt wird.

6. Verfahren nach einem der Ansprüche 1 bis 5, **dadurch gekennzeichnet, dass** die zweite Strahlungsquelle (5) grünes Licht emittiert.

7. Verfahren nach Anspruch 6, **dadurch gekennzeichnet, dass** die zweite Strahlungsquelle (5) Licht der Wellenlänge 532 nm emittiert.

8. Verfahren nach einem der Ansprüche 1 bis 5, **dadurch gekennzeichnet, dass** die zweite Strahlungsquelle (5) rotes Licht emittiert.

9. Verfahren nach einem der Ansprüche 1 bis 8, **dadurch gekennzeichnet, dass** die Intensität des von der zweiten Strahlungsquelle (5) eingekoppelten Lichts am Materialrand etwa 10 mal so hoch ist wie in der Mitte.

10. Verfahren nach einem der Ansprüche 5 bis 9, **dadurch gekennzeichnet, dass** das Licht der zweiten Strahlungsquelle (5) über eine transparente Flüssigkeit in das Material (3) eingekoppelt wird.

11. Verfahren nach einem der Ansprüche 1 bis 10, **dadurch gekennzeichnet, dass** beide Strahlungsquellen (1, 5) gepulstes Licht emittieren, und die eine Strahlungsquelle ausschließlich in den Pulspausen der anderen Strahlungsquelle emittiert.

**12.** Verfahren nach einem der Ansprüche 1 bis 11, **dadurch gekennzeichnet, dass** die erste Strahlungsquelle (1) zweigeteilt ausgebildet ist und Licht mit zwei unterschiedlichen Farben emittiert.

**Claims**

**1.** Method for detecting defects in a transparent material (3), in which a first radiation source (1) is used to irradiate a partial volume (2) of the material (3), in which a second radiation source (5) is used to input light into the material (3) in such a way that during transmission of the light of the second radiation source (5) from the transparent material to the air the incidence angle is greater in relation to the surface normal than the limit angle of total reflection, and the light path passes through the partial volume (2), and in which a defect in the partial volume (2) is detected, **characterized in that**

a) light of the second radiation source (5) scattered by the defect, and
b) an absorption, caused by the defect, in the bright field of the first radiation source (1), and
c) deflection, caused by the defect, of the light of the first radiation source (1)

are detected.

**2.** Method according to Claim 1, **characterized in that** the material (3) is measured with spatial resolution.

**3.** Method according to Claim 1 or 2, **characterized in that** the ratio of bright field signal or deflection signal to scattered light signal is used to determine the type of defect.

**4.** Method according to one of Claims 1 to 3, **characterized in that** the second radiation source (5) emits monochromatic light.

**5.** Method according to one of Claims 1 to 4, **characterized in that** the respective radiation is input in a ribbon-shaped flat glass (3).

**6.** Method according to one of Claims 1 to 5, **characterized in that** the second radiation source (5) emits green light.

**7.** Method according to Claim 6, **characterized in that** the second radiation source (5) emits light of wavelength 532 nm.

**8.** Method according to one of Claims 1 to 5, **charac-**

**terized in that** the second radiation source (5) emits red light.

**9.** Method according to one of Claims 1 to 8, **characterized in that** the intensity of the light input by the second radiation source (5) is approximately 10 times as high at the material edge as in the middle.

**10.** Method according to one of Claims 5 to 9, **characterized in that** the light of the second radiation source (5) is input into the material (3) via a transparent liquid.

**11.** Method according to one of Claims 1 to 10, **characterized in that** the two radiation sources (1, 5) emit pulsed light, and one radiation source emits exclusively in the pulse pauses of the other radiation source.

**12.** Method according to one of Claims 1 to 11, **characterized in that** the first radiation source (1) is of bipartite design and emits light with two different colours.

**Revendications**

**1.** Procédé de détection de défauts dans un matériau transparent (3), dans lequel un volume partiel (2) du matériau (3) est irradié au moyen d'une première source de rayonnement (1), dans lequel de la lumière est couplée dans le matériau (3) au moyen d'une seconde source de rayonnement (5) de telle manière que lors d'un passage de la lumière de la seconde source de rayonnement (5) du matériau transparent à l'air, l'angle d'incidence par rapport à la normale à la surface soit supérieur à l'angle critique de réflexion totale et que le chemin optique passe par le volume partiel (2), et dans lequel un défaut est détecté dans le volume partiel (2), **caractérisé en ce qu'**on détecte :

(a) la lumière de la deuxième source de rayonnement (5) diffusée par le défaut, et
(b) une absorption provoquée par le défaut dans le champ lumineux de la première source de rayonnement (1), et
(c) une déviation de la lumière de la première source de rayonnement (1) provoquée par le défaut.

**2.** Procédé selon la revendication 1, **caractérisé en ce que** le matériau (3) est mesuré avec une résolution spatiale.

**3.** Procédé selon la revendication 1 ou 2, **caractérisé en ce que** le rapport du signal de champ lumineux ou du signal de déviation au signal de lumière diffusée est utilisé pour déterminer le type de défaut.

4. Procédé selon les revendications 1 à 3, **caractérisé en ce que** la deuxième source de rayonnement (5) émet une lumière monochromatique.

5. Procédé selon l'une des revendications 1 à 4, **caractérisé en ce que** le rayonnement respectif est injecté dans du verre plan sous forme de bande (3).

6. Procédé selon l'une des revendications 1 à 5, **caractérisé en ce que** la seconde source de rayonnement (5) émet une lumière verte.

7. Procédé selon la revendication 6, **caractérisé en ce que** la seconde source de rayonnement (5) émet une lumière ayant une longueur d'onde de 532 nm.

8. Procédé selon l'une des revendications 1 à 5, **caractérisé en ce que** la seconde source de rayonnement (5) émet de la lumière rouge.

9. Procédé selon l'une des revendications 1 à 8, **caractérisé en ce que** l'intensité de la lumière injectée par la seconde source de rayonnement (5) à la périphérie du matériau est environ 10 fois plus élevée qu'au milieu.

10. Procédé selon l'une des revendications 5 à 9, **caractérisé en ce que** la lumière de la seconde source de rayonnement (5) est injectée à la surface supérieure du matériau (3) de manière à ce qu'elle soit soumise à une réflexion interne totale.

11. Procédé selon l'une des revendications 1 à 10, **caractérisé en ce que** les deux sources de rayonnement (1, 5) émettent une lumière pulsée et **en ce que** l'une des sources de rayonnement n'émet que pendant les intervalles entre impulsions de l'autre source de rayonnement.

12. Procédé selon l'une des revendications 1 à 11, **caractérisé en ce que** la première source de rayonnement (1) est réalisée en deux parties et **en ce qu'**elle émet une lumière ayant deux couleurs différentes.

Fig. 1

EP 1 477 793 B1

EP 1 477 793 B1

4

6

3

2

5

$\lambda_2$

$\lambda_1$

1

Fig. 2

Fig.3

Fig. 4

EP 1 477 793 B1

Takt
Laser

Takt
LED 1

Takt
LED 2

Zeit

Fig. 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 9949303 A
- JP H10339795 B
- DE 10221945
- JP 8261953 A
- WO 9949304 A

**In der Beschreibung aufgeführte Nicht-Patentliteratur**

- *Patent Abstracts of Japan,* vol. 1997 (2